# FASCICULE DE BREVET EUROPEEN

(11) **EP 0 619 628 B1**
(45) Date de publication et mention de la délivrance du brevet: **29.01.1997**
(21) Numéro de dépôt: 94400717.8
(22) Date de dépôt: 01.04.1994
(51) Int. Cl.: H01R 23/10, H01R 13/453, H01R 13/629

(54) **Connecteur électrique et plus particulièrement connecteur de charge**
Elektrische Verbinder insbesondere Verbinder zum Laden von Akkus
Electrical connector particularly battery charging connector

(30) Priorité: 09.04.1993 FR 9304254
(43) Date de publication de la demande: 12.10.1994
(73) Titulaire: Société d'Exploitation des Procédés Maréchal S.E.P.M. (Société Anonyme), F-75012 Paris (FR)
(72) Inventeur: Crestin, Joseph, F-92170 Vanves (FR)
(74) Mandataire: Chambon, Gérard

(56) Documents cités:
- WO-A-93/04511
- FR-A- 933 196
- US-A- 2 444 843
- US-A- 3 270 267
- US-A- 3 668 605

## Description

L'invention concerne un connecteur électrique et plus particulièrement un connecteur de charge. Un connecteur est constitué d'une prise mobile reliée à un câble souple et un socle de connecteur faisant partie d'un appareil d'utilisation.

La prise mobile est connectée par son câble à une source d'alimentation.

Pour constituer un connecteur de charge, il suffit par conséquent que le socle soit relié ou fasse partie de l'appareil à charger.

L'appareil à charger peut, par exemple, être constitué par une batterie d'accumulateurs pour véhicules ou autres systèmes électriques.

C'est d'ailleurs pourquoi l'expression connecteur de charge doit être comprise comme un connecteur tel que défini précédemment à ceci près que le socle relié à des accumulateurs peut aussi être sous tension.

Les connecteurs connus sont souvent d'un emploi peu pratique et nécessitent des manoeuvres difficiles d'accouplement avec des mouvements de translation et/ou de rotation coaxiale de la prise dans le socle. Il faut en outre souvent exercer des forces importantes, ce qui complique les manoeuvres.

Ces difficultés sont des inconvénients majeurs pour l'application précitée de la mise en charge d'un véhicule électrique puisque celle-ci doit pouvoir être accomplie par l'utilisateur lui-même.

En outre, si l'on peut prévoir des connecteurs pour charge lente afin d'assurer une charge, par exemple, au domicile de l'utilisateur, on doit aussi envisager des connecteurs capables de supporter également une charge rapide, effectuée, par exemple, à un poste spécial de ravitaillement.

Généralement, un connecteur de charge est pourvu de contacts pilotes destinés à commander un appareil de coupure disposé en amont du socle du connecteur et/ou de la prise mobile de façon à commander un interrupteur. En effet, en dehors de tout problème de protection des contacts, il est avantageux que la connexion et la séparation des contacts de puissance s'établissent hors tension. Pour cela, il suffit que les contacts pilotes agissent sur l'interrupteur de telle sorte que celui-ci ferme le circuit après la connexion des contacts de puissance et au contraire, ouvre le circuit avant la séparation desdits contacts. Une telle mesure n'est pas simple à réaliser.

Lorsque l'on cherche à améliorer un aspect d'un connecteur, la solution adoptée présente souvent des inconvénients pour les autres aspects à traiter. C'est pourquoi l'inventeur a cherché un dispositif qui soit dans son ensemble pratique et sûr.

On connaît aussi certains dispositifs de connexion qui comportent deux éléments de connexion dont l'un est mobile et qui sont aménagés pour pouvoir s'accoupler et se désaccoupler entre eux et mettre en connexion, ou réciproquement séparer, des contacts antagonistes dont ils sont pourvus, les contacts d'au moins l'élément non mobile ayant des pièces de contact qui s'étendent parallèlement entre elles et définissent une direction de connexion, tandis que l'accouplement et le désaccouplement s'effectuent par rotation de l'élément mobile dans l'autre élément autour d'un axe disposé géométriquement de façon perpendiculaire à ladite direction de connexion.

C'est par exemple, au moins en partie, le cas du dispositif décrit dans le brevet US-3,668,605.

Toutefois, ces dispositifs ne sont pas prévus ni aménagés pour constituer un connecteur tel que défini ci-avant et encore moins un connecteur de charge.

L'inventeur a imaginé de concevoir un connecteur comportant deux éléments de connexion tels que définis ci-avant, l'élément mobile étant une prise mobile et l'autre élément un socle de connecteur.

En outre, pour notamment constituer un connecteur de charge, mais pas exclusivement, l'invention prévoit que l'élément mobile est une prise mobile et l'autre élément un socle de connecteur, et que le socle est pourvu d'un élément de protection qui cache au repos les pièces de contact dudit socle et qui est monté rotatif dans celui-ci de manière à pouvoir être entraîné en rotation par la prise mobile au cours de l'accouplement, tandis que ledit élément de protection comporte deux volets qui peuvent coulisser l'un par rapport à l'autre et qui sont pourvus chacun d'au moins autant d'ajours qu'il y a de pièces de contact dans le socle et qui sont disposés de la même manière, lesdits volets étant positionnés au repos l'un par rapport à l'autre de façon que lesdits ajours soient décalés entre eux et des moyens étant prévus pour entraîner le coulissement des volets l'un par rapport à l'autre au cours de l'accouplement jusqu'à provoquer la juxtaposition desdits ajours qui peuvent alors être traversés par les pièces de contact du socle.

En dehors de tout problème particulier de protection des contacts à nu, l'élément de protection peut au moins constituer un élément psycologique pour l'utilisateur ou même déjà un protecteur contre les intempéries.

Avantageusement, l'élément de protection comporte au moins un moyen de verrouillage en position initiale interdisant toute rotation, ledit moyen étant déverrouillable par la prise mobile au cours de son accouplement tandis que les moyens qui entraînent le coulissement des volets du socle l'un par rapport à l'autre, sont aménagés de manière que ledit coulissement s'effectue au cours de la rotation d'au moins la prise mobile.

De préférence dans ce cas, lesdits moyens qui entraînent et/ou maintiennent le coulissement des volets du socle l'un par rapport à l'autre comportent au moins une came fixe aménagée dans le socle et au moins un doigt d'entraînement qui est fixé sur l'un des volets et qui est destiné à coopérer avec ladite came.

Selon un mode de réalisation comportant comme déjà dit un moyen de verrouillage en position initiale de l'élément de protection, ledit moyen est assuré par le doigt d'entraînement qui vient en butée sur une partie de la came fixe et qui est amené en position de déverrouillage par la prise au cours de son accouplement, laquelle assure en même temps le coulissement des volets l'un par rapport à l'autre, coulissement poursuivi et/ou maintenu par la coopération du doigt et de la came. Il est clair cependant que le moyen de verrouillage en position initiale pourrait être indépendant des moyens assurant le coulissement des volets l'un sur l'autre.

Selon l'invention, on prévoit aussi pour la prise mobile, une forme frontale courbe, des ergots latéraux, un moyen d'accrochage et de verrouillage dans le socle, ... De même, l'élément de protection peut comporter une embase incurvée, au moins un ergot de guidage, des ressorts de rappels, tous ces moyens étant décrits plus en détail ci-après.

Selon un mode de réalisation, la prise est pourvue de contacts aménagés dans des puits dont les embouchures sont masquées au repos par un volet de protection monté translatif et pourvu d'au moins autant d'ajours que la prise est pourvue de contacts et qui sont disposés de la même manière, tandis que le socle est pourvu de moyens appropriés pour permettre le coulissement du volet de la prise de façon à juxtaposer les ajours dudit volet avec les contacts de la prise au cours de l'accouplement. On comprend alors que la prise comme le socle sont protégés.

De préférence dans ce cas, les moyens du socle pour faire coulisser le volet de prise comportent au moins une butée fixe disposée de manière à solliciter la partie arrière dudit volet en le poussant vers l'avant au cours de la rotation de ladite prise, des ajours correspondants étant alors prévus dans les volets de l'élément de protection pour le passage de ladite butée tandis que le volet de la prise est verrouillé au repos par au moins un moyen élastique qui est escamotable par sollicitation d'au moins un moyen approprié, au cours de l'accouplement, celui-ci pouvant, par exemple, être constitué par l'ergot de guidage prévu pour positionner ladite prise.

Un connecteur et plus particulièrement un connecteur de charge selon l'invention dont le socle et la prise sont pourvus chacun d'au moins un contact pilote qui est destiné à commander un appareil de coupure disposé en amont de l'un des éléments, peut en outre être remarquable en ce que chaque contact pilote est disposé sur l'élément correspondant à une plus grande distance de l'axe géométrique de rotation de la prise que ne le sont les contacts de puissance dudit élément de façon à obtenir lors de l'accouplement des éléments par rotation, la connexion du contact pilote d'un élément avec le contact pilote antagoniste de l'autre élément seulement après la connexion des contacts de puissance et inversement lors du désaccouplement desdits éléments, la déconnexion desdits contacts pilotes avant la déconnexion des contacts de puissance.

Cette disposition est tout à fait avantageuse puisque l'on obtient nécessairement un ordre de connexion correct entre les contacts pilotes et les contacts de puissance.

Dans le cas d'un connecteur de charge pour véhicule automobile, le socle est prévu pour être aménagé sur le véhicule et la prise mobile connectée à une source d'alimentation électrique.

Les contacts peuvent être de diverses natures mais selon un mode de réalisation, les contacts d'au moins l'un des éléments sont des contacts à pression.

Avantageusement au moins certains des contacts d'au moins l'un des éléments comportent des bornes de contact mobiles élastiquement, fixées sur des câbles de connexion disposés au niveau desdites bornes perpendiculairement à la direction de connexion.

Il est clair que si l'invention concerne un connecteur en général et plus spécialement un connecteur de charge, l'invention concerne aussi le socle et la prise mobile du connecteur pris chacun séparément.

L'invention sera mieux comprise et d'autres particularités apparaîtront à la lecture de la description qui va suivre et qui se réfère aux dessins annexés dans lesquels:
- la figure 1 montre en perspective un socle de connecteur selon l'invention et deux modèles de réalisation d'une prise mobile,
- la figure 2 est une vue en perspective par l'arrière d'un élément de protection selon l'invention,
- la figure 3 est une vue en plan du dessus de la prise mobile,
- la figure 4 est une coupe selon IV-IV de la figure 3,
- les figures 5 à 12 montrent schématiquement en coupe les diverses phases d'accouplement d'une prise mobile dans son socle, montrant ainsi le fonctionnement des divers éléments,
- la figure 13 est une coupe longitudinale du socle et d'une partie d'une prise selon l'invention, en position de connexion.

Un connecteur selon l'invention comporte une prise mobile, dont deux modes de réalisation 1, 1' sont représentés sur les dessins, et un socle 2. Pour un connecteur de charge de véhicule électrique, le socle 2 est destiné à être aménagé dans ledit véhicule et connecté à des batteries d'accumulateurs tandis que les prises 1, 1' sont prévues pour être reliées à une source d'alimentation électrique.

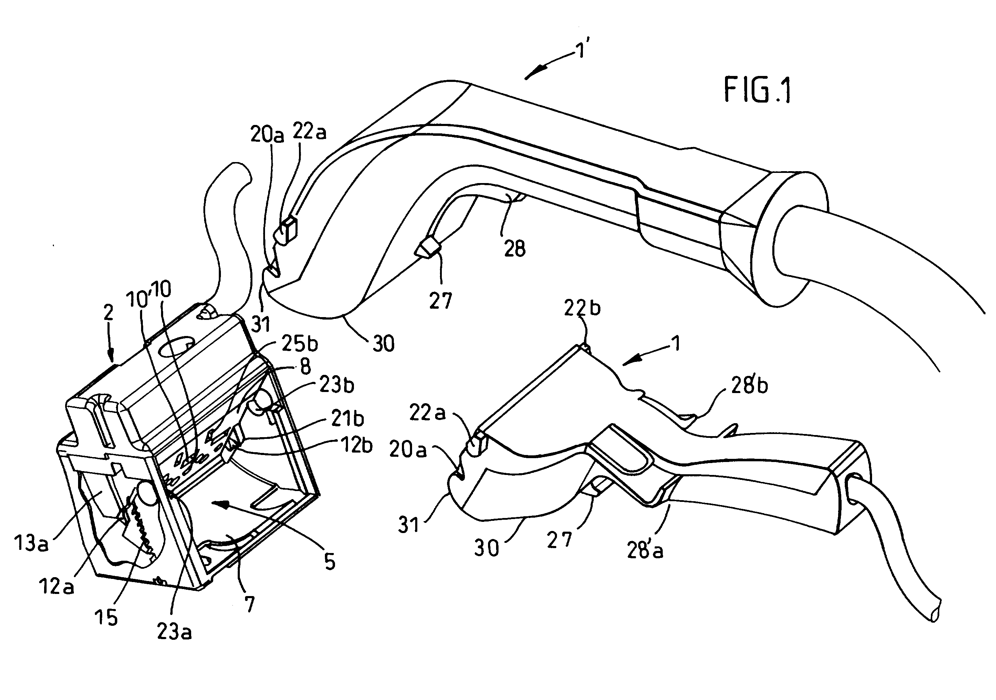

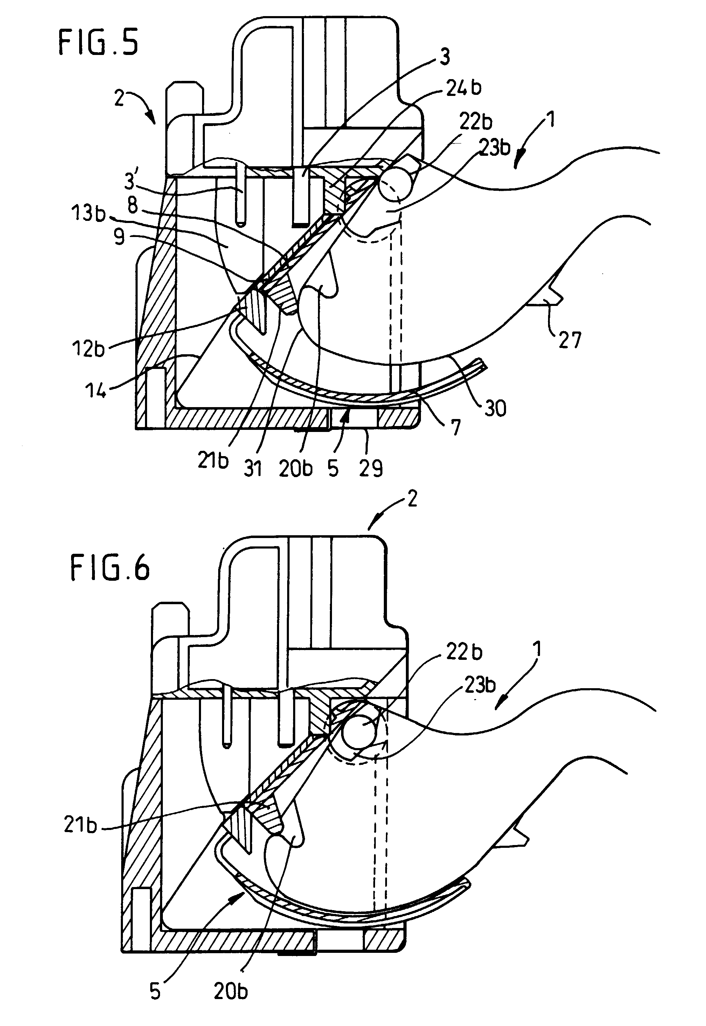

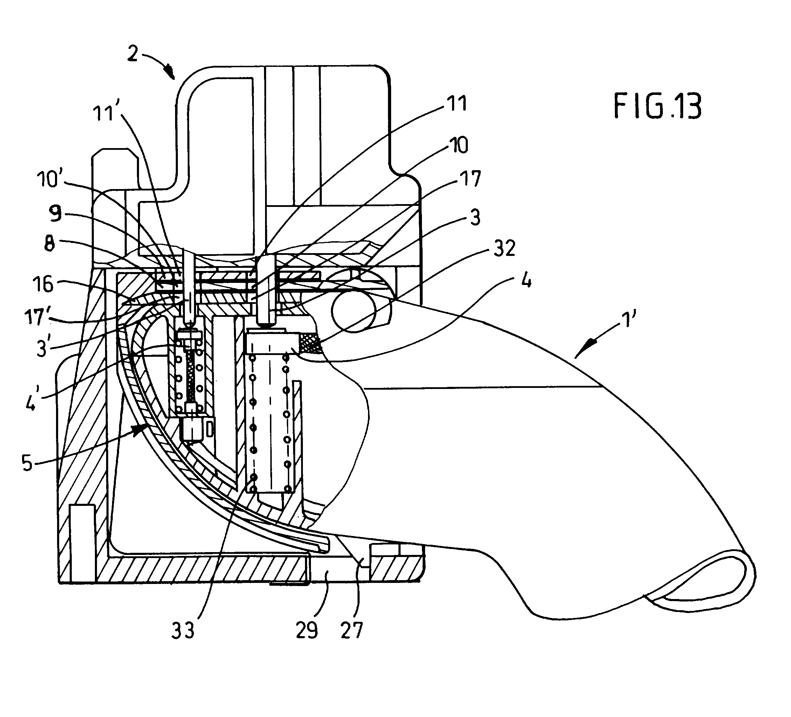

Sur la figure 1, on a représenté les deux prises 1 et 1', tandis que les figures 5 à 12 montrent la prise 1 et la figure 13 la prise 1'.

En fait, les différences entre les prises 1 et 1' sont principalement dues à leurs fonctions, d'où des tailles différentes, la prise 1 étant, par exemple, pour une charge lente, tandis que la prise 1' peut assurer une charge rapide au moyen, par exemple, d'une borne électrique d'alimentation prévue à cet effet. Toutefois, lesdites prises présentent toutes les deux une forme de crosse pour faciliter leur manipulation.

Les contacts du socle 2 se présentent sous la forme de broches parallèles entre elles, tels que 3, 3' sur les figures 5 à 13, 3 étant par exemple un contact de puissance ou de phase et 3' un contact pilote dont il sera question ci-après (il existe bien sûr autant de contacts que désirés).

La prise mobile comporte des contacts antagonistes tels que 4, 4' représentés sur la figure 13, destinés à venir en connexion avec les contacts précités du socle (le contact 4 étant par exemple un contact de puissance et 4' un contact pilote).

Les figures montrent bien que les contacts 3, 3' du socle font saillie de la face supérieure du socle 2 tandis que les contacts 4, 4' de la prise mobile 1, 1' sont prévus à l'intérieur de puits comme le montre la figure 13 et ne font donc pas saillie vers l'extérieur.

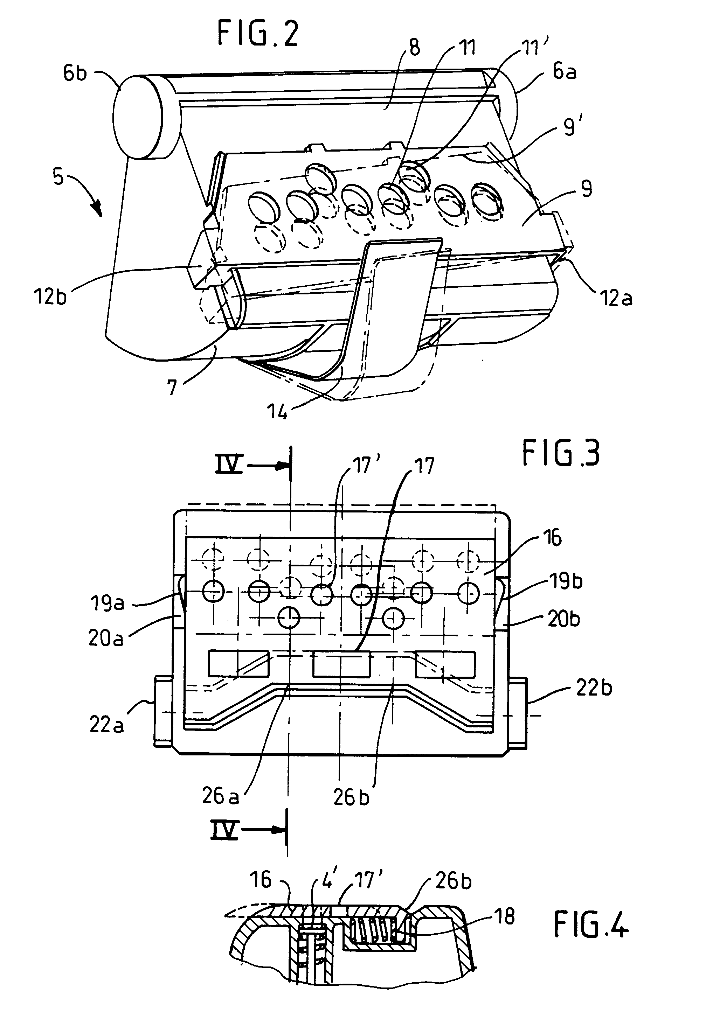

Dans le socle 2, est monté un élément de protection 5, plus particulièrement visible sur les figures 1 et 2.

L'élément 5 est monté rotatif dans le socle 2 au moyen d'ergots 6a, 6b (figure 2) destinés à venir se loger dans des paliers appropriés du socle 2.

L'élément de protection 5 forme une sorte de coin ouvert vers l'extérieur du socle et muni d'une embase 7 incurvée solidaire ou comme ici d'une seule pièce avec un volet de base 8 sur lequel est monté de manière coulissante un volet supérieur 9 (figure 2). Comme le montre bien la figure 2, les ergots de rotation 6a et 6b sont aménagés au voisinage du bord libre du volet de base 8. L'élément 5 comporte en outre ici des parois latérales reliant le volet 8 et l'embase 7.

Les volets 8 et 9, comme le montrent les dessins et plus particulièrement les figures 1, 2 et 11 à 13, sont pourvus d'ajours tels que 10 et 10' (figure 1 et figures 11 à 13) pour le volet 8 et 11, 11' pour le volet 9, comme schématisé sur la figure 2 et les figures 11 à 13.

Le volet supérieur 9 comporte en outre deux doigts latéraux 12a, 12b destinés à coopérer avec des cames telles que la came 13a du socle (l'autre came n'étant pas visible sur les dessins) comme il sera expliqué ci-après (seuls l'ergot 12b et la came 13b sont visibles sur les figures 5 à 13, l'ergot étant en outre représenté en coupe pour des raisons de clarté des dessins).

Le volet 9 peut coulisser sur le volet 8 tandis qu'il est sollicité au repos vers le côté de l'ouverture du socle 2 par un ressort 14 (plus particulièrement visible sur la figure 2).

Les ajours 10, 10' du volet 8 et les ajours 11, 11' du volet 9 sont disposés de la même manière que les contacts 3, 3' du socle. En outre, ils sont initialement positionnés de façon à ne pas être juxtaposés comme le montre la figure 1.

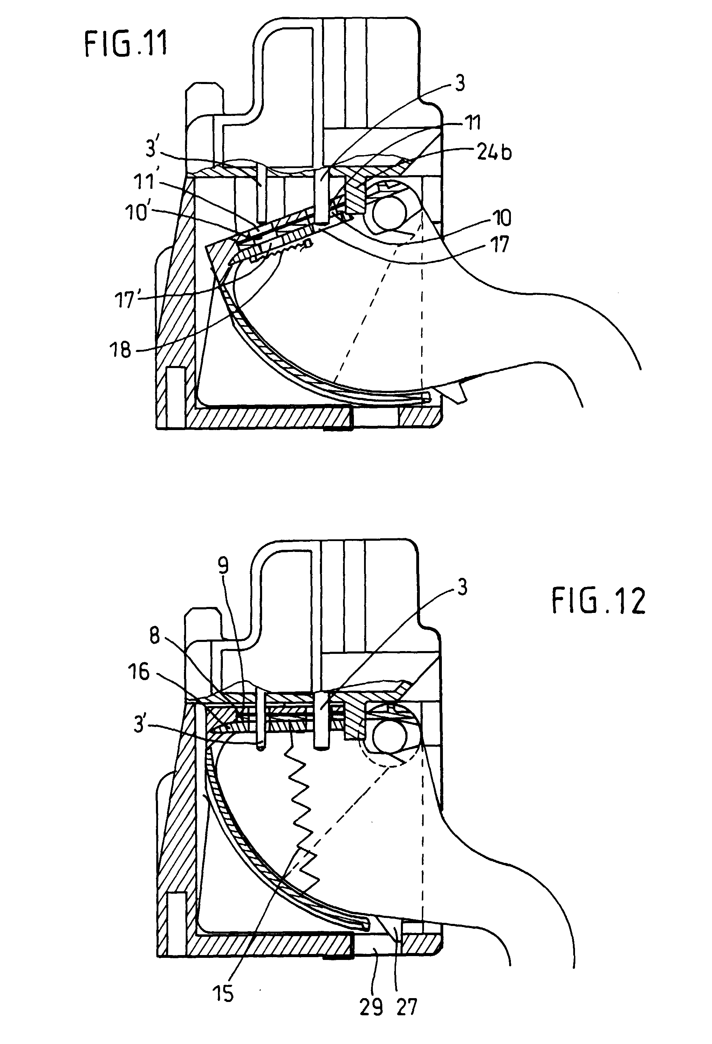

L'élément de protection 5 est disposé dans le socle 2, comme déjà indiqué, par ses ergots 6a, 6b mais de façon telle qu'au repos, les volets 8 et 9 forment un angle dièdre avec la paroie supérieure du socle 2 d'où font saillie les contacts 3, 3'. Cette position initiale est ainsi rappelée élastiquement par des ressorts tels que le ressort 15 visible sur les figures 1 et 12 (un autre ressort étant généralement prévu de manière symétrique de l'autre côté).

De la sorte, on comprend que les contacts 3, 3' du socle sont masqués et protégés au repos.

Par ailleurs, on comprend aussi que les doigts 12a et 12b du volet 9 sont en butée dans cette position initiale avec une partie correspondante des cames telle la came 13b, comme le montrent bien les figures 1 et 5 à 7, ce qui verrouille en rotation l'élément de protection 5.

La prise 1, 1' comporte sur sa partie supérieure un volet 16 (figures 3 et 10 à 13) qui est pourvu d'ajours tels que 17, 17' disposés de la même manière que les contacts 4, 4' dont la prise est munie.

Le volet 16 est monté coulissant sur le dessus de la prise de manière à pouvoir coulisser vers l'avant. Le volet 16 est initialement positionné de façon à masquer tous les contacts 4, 4' de la prise. Il est sollicité dans cette position par au moins un ressort 18 et de préférence deux (figure 4 et schématisé sur la figure 11) tandis qu'il est en outre verrouillé par des pattes élastiques 19a, 19b qui prennent place au repos dans des encoches 20a, 20b (figures 1, 3 et 5 à 9) ménagées dans la prise et dont il sera question ci-après.

Par ailleurs, le socle 2 est muni d'ergots de guidage tels que l'ergot 21b visible sur les figures 1 et 5 à 9 (un autre doigt est bien sûr prévu symétriquement de l'autre côté), qui sont disposés devant les doigts 12a et 12b du volet supérieur 9 de l'élément de protection 5.

En outre, comme le montrent les figures 1 et 3, la prise est pourvue d'ergots latéraux 22a, 22b destinés à venir dans des logements 23a, 23b (figure 1) de l'élément de protection, comme il sera expliqué ci-après.

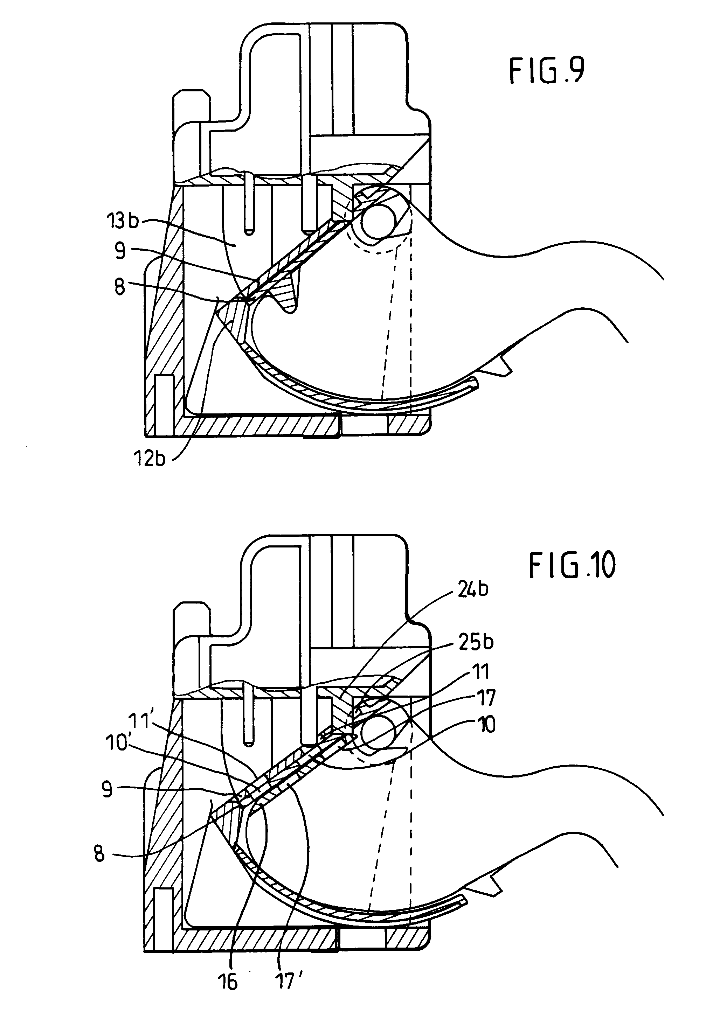

Pour finir cette première phase de la description, signalons aussi que le socle 2 est muni de deux butées dont une seule 24b est visible sur les figures 5 à 12, laquelle pourra traverser des ajours correspondants des volets 8 et 9, comme l'ajour 25b du volet 8 des figures 1 et 10. Les butées telle la butée 24b, sont prévues pour venir pousser des zones correspondantes 26a, 26b (figures 3 et 4) du volet 16 de la prise.

On peut également voir sur les dessins que la prise 1, 1' est pourvue d'un crochet 27 actionnable par un levier 28 pour la prise 1 des figures 1 et 13, ou par des poussoirs latéraux 28'a, 28'b pour la prise 1'.

Le crochet 27 est destiné à coopérer avec une fenêtre 29 du socle, prévue à l'opposé de l'axe de rotation de l'élément de protection 5. Enfin on peut encore constater que la prise 1, 1' présente une forme incurvée 30 destinée à venir épouser la forme correspondante de l'embase 7 et que l'extrémité frontale 31 de ladite prise est courbe en formant une sorte de came dont il sera question ci-après.

Le fonctionnement sera bien compris à la lecture de la description qui va suivre des manoeuvres d'accouplement décomposées selon les figures 5 à 13.

Les figures 5 à 13 sont évidemment schématiques et ne représentent plus spécialement que les éléments caractéristiques qui expliquent la position des éléments.

C'est pourquoi aussi pour chacune des représentations, en dehors de la figure 5, on a volontairement limité le nombre de références pour ne conserver que les références utiles.

La figure 5 montre l'approche de la prise 1 dans l'élément de protection 5 du socle 2, ledit élément étant bloqué en rotation par le doigt 12b du volet 9 qui s'appuie sur une zone appropriée de la came 13b.

Sur la figure 6, on constate une mise en place de la prise par ses ergots tels que 22b dans les logements correspondants, ici 23b.

Cette phase est importante et la figure 6 montre en outre que la forme du logement 20b dans lequel doit venir l'ergot de guidage 21b de l'élément de protection, de même que la forme du logement 23b, sont telles que si la prise ne se présente pas avec précision dans cette position, une rotation complémentaire de la prise fera échapper celle-ci de l'élément 5. Au contraire, dès le début de la rotation de la prise, celle-ci étant bien positionnée, elle ne peut plus s'échapper de l'élément 5.

Il est très important de noter en effet qu'à partir de cette mise en place, tous les organes sont commandés par une rotation de la prise 1 dans le socle 2.

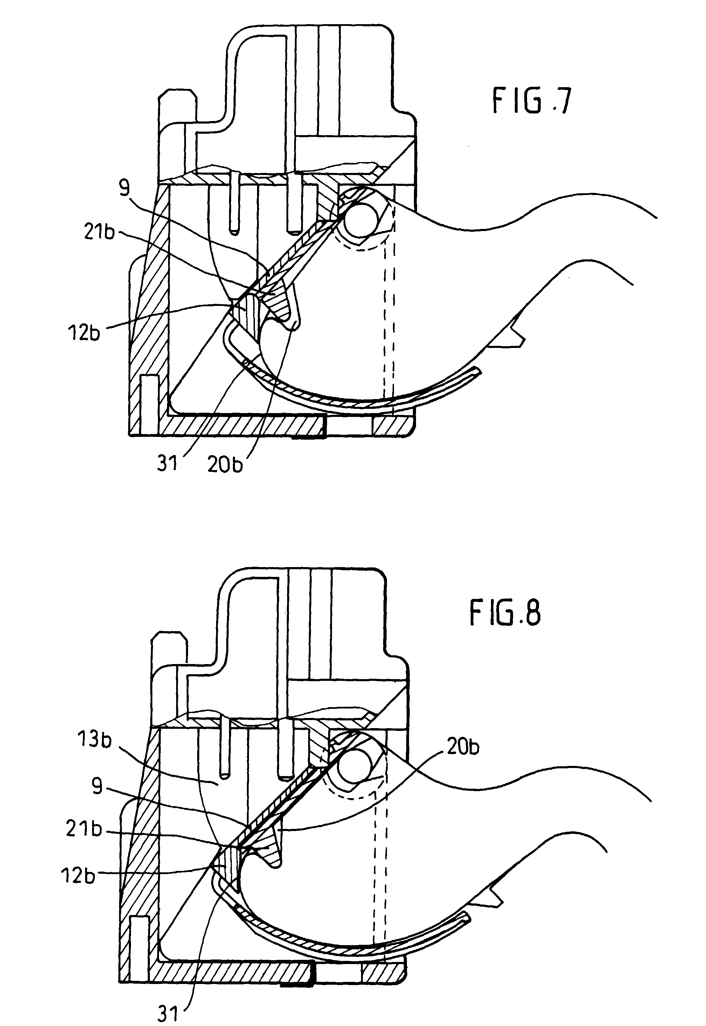

Dès le début de la rotation de la prise (figure 7) l'ergot 21b, en prenant place dans le logement 20b, positionne correctement les éléments l'un dans l'autre. En outre, sur cette figure, on peut voir l'extrémité frontale courbe 31 de la prise entrer en contact avec le doigt 12b du volet 9.

Sur la figure 8, la rotation de la prise se poursuivant, l'extrémité 31 de celle-ci entraîne en translation le doigt 12b du volet 9, ledit doigt quittant la zone de verrouillage de la came 13b (zone en plan incliné sur les dessins). On comprend que l'élément 5 est alors déverrouillé en rotation, de même que le volet 16 de la prise (visible plus spécialement sur la figure 3) est déverrouillé en translation grâce à l'ergot de guidage 21b qui, en se logeant complètement dans le logement 20b, vient provoquer l'escamotage ou l'effacement de la patte de verrouillage élastique 19b visible sur la figure 3 (la même chose se produit bien sûr de l'autre côté pour la patte 19a). On comprend aussi que si la translation du doigt 12b permet de déverrouiller l'élément 5, cette translation concerne aussi bien sûr celle du volet 9 sur le volet 8.

La figure 9 montre le début de la rotation de l'ensemble prise et élément 5. La forme de la came 13b permet au doigt 12b de terminer la translation du volet 9 sur le volet de base 8 (zone de la came sensiblement horizontale visible sur les figures précédentes et éventuellement début de la partie courbe de ladite came) de telle sorte que les contacts du socle pourront traverser lesdits volets, comme il sera expliqué ci-après. On voit bien qu'à partir de cette position, la prise mobile n'est plus en contact avec le doigt 12b, la position relative des volets 8 et 9 étant maintenue au cours de la rotation qui suit grâce à la forme courbe appropriée de la came. Toutefois, avec des formes convenables de la prise et du doigt 12b associées à une configuration appropriée, on peut envisager une translation du volet 9 complète par la prise seulement, la came étant réduite à une butée de verrouillage en rotation, laquelle pourrait de plus être remplacée par un autre moyen.

La figure 10 montre la suite des opérations de rotation. Sur cette figure, on a représenté les volets 8 et 9 munis de leurs ajours 10, 10'; 11, 11' et on a en outre représenté le volet 16 de la prise muni aussi de ses ajours 17, 17'. Lesdits ajours précités et le volet 16 n'étaient pas visibles sur les figures précédentes 5 à 9 alors qu'ils sont visibles sur ladite figure 10 et les figures suivantes 11 à 13.

Toujours sur la figure 10, on peut voir la butée 24b qui traverse des ajours appropriés (25b), comme déjà dit, des volets 8 et 9 et qui vient s'appuyer à l'arrière du volet 16 de la prise (sur une partie appropriée 26b, comme décrit précédemment à propos de la figure 2).

Comme le montre maintenant la figure 11, la butée 24b a entraîné le coulissement du volet 16 vers l'avant jusqu'à ce que ses ajours 17, 17' soient pratiquement en regard des ajours 10, 10'; 11, 11' des volets 8 et 9 pour le passage des contacts 3, 3' du socle, comme on peut le voir sur les figures 11 à 13.

Sur les figures 12 et 13 qui représentent la position finale d'accouplement, on voit bien les contacts 3 et 3' du socle traverser complètement les volets 8, 9 et 16. On voit aussi le crochet 27 de la prise 1 dans la fenêtre 29 du socle, de telle sorte que ladite prise est immobilisée dans le socle.

En outre, la figure 13 dont il sera question ci-après, montre la connexion électrique entre les contacts 3, 3' du socle et les contacts 4, 4' de la prise.

Sur la figure 13, on a représenté un contact 4' à pression en bout avec ressort et tresse et un autre contact 4 plus particulier.

Comme le montre cette figure, le contact 4 est une borne de contact fixée à l'extrémité dénudée d'un câble 32 et qui est sollicitée par un ressort 33, la mobilité du contact 4 étant rendue possible grâce au débattement dudit câble 32 dont l'extrémité est sensiblement perpendiculaire, en position de connexion, avec le contact antagoniste 3 du socle.

Si l'exemple représenté montre plus particulièrement un contact 4 de puissance de cette nature, il pourrait au contraire s'agir des contacts pilotes 4' ou de tous les contacts, supprimant ainsi les inconvénients que l'on peut rencontrer dans les contacts à tresse.

On a compris que le seul mouvement de manoeuvre pour l'accouplement de la prise dans le mode de réalisation décrit, est avantageusement un mouvement simple de rotation. Toutefois, ce mouvement de rotation pourrait être précédé d'un premier mouvement de translation pour, par exemple, déverrouiller les éléments et/ou entraîner la translation du volet de la prise. L'inventeur a cherché un mode de réalisation plus innovant qui simplifie les manipulations.

Le mouvement de rotation est en outre avantageux étant donné la grande force que l'on peut déployer, d'où une pression de contact satisfaisante facilement obtenue.

De plus, étant donné une connexion en arc de cercle, on assure en fin de course un frottement et donc un autonettoyage des extrémités de contacts.

Avec la position des contacts telle que représentée, il est clair que la connexion des contacts de puissance 3 et 4 s'établira avant celle des contacts pilotes 3', 4'.

Pour désaccoupler les éléments, il suffit d'effectuer les manoeuvres inverses après avoir déverrouillé la prise en agissant sur le levier 28 ou l'un des poussoirs 28a, 28b (figure 1).

Lors de cette opération de désaccouplement, on obtiendra de nouveau un frottement des contacts et par contre un ordre de déconnexion inverse, c'est-à-dire déconnexion des contacts pilotes d'abord et des contacts de puissance ensuite.

Ainsi, on respecte obligatoirement l'ordre de connexion et de déconnexion souhaité des divers contacts, les séquences de connexion et déconnexion pouvant en outre être réglées par un décalage complémentaire des contacts dont les extrémités ne sont pas nécessairement toutes dans le même plan.

Pour revenir en position initiale, on comprend que le volet 16 de la prise est sollicité par des ressorts tels que le ressort 18 des figures 4 et 11, que l'élément 5 est sollicité en rotation par des ressorts tels que 15 (figure 1 et 12). Enfin, le volet 9 coulisse en sens inverse sur le volet 8 pour de nouveau verrouiller l'élément 5, grâce au ressort 14 visible sur presque tous les dessins, mais plus spécialement sur la figure 2.

Si, comme le montre plus particulièrement la figure 1, l'ergot de guidage 21b gêne en partie l'accès du doigt 12b en le protégeant, la figure 2 montre qu'une sollicitation unilatérale d'un ergot 12a ou 12b (avec autre chose que la prise 1, 1') provoque une mise en biais du volet 9, comme représenté en trait interrompu en 9' sur ladite figure 2, causant ainsi un déverrouillage incomplet puisque unilatéral. Ceci est dû au fait qu'il n'y a qu'un seul ressort 14 alors que l'on prévoit généralement deux ressorts 15 et deux ressorts 18.

De nombreuses variantes peuvent évidemment être imaginées sans sortir du cadre de l'invention.

C'est ainsi, par exemple, que les contacts mobiles munis de ressorts pourraient être prévus dans le socle plutôt que dans la prise mobile.

Il y a lieu aussi de remarquer que les ergots latéraux 22a, 22b de la prise ne servent que d'appui et ne sont pas indispensables, la prise mobile pouvant être guidée essentiellement par la forme de l'élément 5.

En outre, comme on l'a déjà dit, les moyens de verrouillage en rotation de l'élément 5 et les moyens d'entraînement en coulissement du volet 9 pouvent être distincts et il est clair que la prise mobile 1, 1' pourrait provoquer un déverrouillage en rotation par l'actionnement, par exemple, d'un verrou ou similaire, alors que le coulissement des volets serait provoqué uniquement par les cames fixes. Au contraire, selon un autre mode de réalisation, les cames fixes pourraient être réduites à la partie formant butée de verrouillage tandis que le coulissement en translation pourrait, comme déjà dit aussi, être entièrement assuré par la prise mobile. Dans ce dernier cas, il est encore possible de supprimer complètement les cames, le verrouillage en rotation étant effectué autrement, alors que la prise assure toujours le déverrouillage et le coulissement des volets, lesquels sont maintenus par ailleurs dans cette position par tout moyen approprié.

## Revendications

1. Dispositif de connexion électrique comportant deux éléments de connexion dont l'un est mobile et qui sont aménagés pour pouvoir s'accoupler et se désaccoupler entre eux et mettre en connexion, ou réciproquement séparer, des contacts antagonistes (3,3';4,4') dont ils sont pourvus, les contacts d'au moins l'élément non mobile ayant des pièces de contact (3,3') qui s'étendent parallèlement entre elles et définissent une direction de connexion, tandis que l'accouplement et le désaccouplement s'effectuent par rotation de l'élément mobile dans l'autre élément autour d'un axe disposé géométriquement de façon perpendiculaire à ladite direction de connexion, caractérisé en ce qu'il constitue un connecteur, l'élément mobile étant une prise mobile (1,1') et l'autre élément un socle (2) de connecteur, et en ce que le socle est pourvu d'un élément de protection (5) qui cache au repos les pièces de contact (3,3') dudit socle et qui est monté rotatif dans celui-ci de manière à pouvoir être entraîné en rotation par la prise mobile au cours de l'accouplement, tandis que ledit élément de protection (5) comporte deux volets (8,9) qui peuvent coulisser l'un par rapport à l'autre et qui sont pourvus chacun d'au moins autant d'ajours (10,10';11,11') qu'il y a de pièces de contact dans le socle et qui sont disposés de la même manière, lesdits volets étant positionnés au repos l'un par rapport à l'autre de façon que lesdits ajours soient décalés entre eux et des moyens étant prévus pour entraîner le coulissement des volets l'un par rapport à l'autre au cours de l'accouplement jusqu'à provoquer la juxtaposition desdits ajours (10,10';11,11') qui peuvent alors être traversés par les pièces de contact (3,3') du socle.

2. Connecteur selon la revendication 1, caractérisé en ce que l'élément de protection (5) présente la forme d'un coin ouvert vers l'extérieur du socle et muni d'une embase (7) incurvée solidaire ou d'une seule pièce avec un volet de base (8) sur lequel est monté de manière coulissante un volet supérieur, l'axe de rotation dudit élément (5) étant aménagé au voisinage du bord libre dudit volet de base (8).

3. Connecteur selon la revendication 2, caractérisé en ce que la prise présente une partie incurvée (30) de forme conjuguée à celle de l'embase (7) de l'élément de protection (5) de telle sorte que ladite prise puisse venir se loger de manière étroite dans ledit élément de protection (5).

4. Connecteur selon l'une des revendications 1 à 3, caractérisé en ce que l'élément de protection (5) comporte au moins un moyen de verrouillage en position initiale interdisant toute rotation, ledit moyen étant déverrouillable par la prise mobile (1,1') au cours de son accouplement.

5. Connecteur selon l'une des revendications 1 à 4, caractérisé en ce que les moyens qui entraînent le coulissement des volets du socle l'un par rapport à l'autre, sont aménagés de manière que ledit coulissement s'effectue au cours de la rotation d'au moins la prise mobile (1,1').

6. Connecteur selon la revendication 5, caractérisé en ce que les moyens qui entraînent et/ou maintiennent le coulissement des volets du socle l'un par rapport à l'autre comportent au moins une came fixe (13b) aménagée dans le socle (2) et au moins un doigt d'entraînement (12a,12b) qui est fixé sur l'un (9) des volets et qui est destiné à coopérer avec ladite came.

7. Connecteur selon l'ensemble des revendications 4 et 6, caractérisé en ce que le moyen de verrouillage en position initiale de l'élément de protection (5) est assuré par le doigt d'entraînement (12a, 12b) qui vient en butée sur une partie de la came fixe (13b) et qui est amené en position de déverrouillage par la prise (1,1') au cours de son accouplement, laquelle assure en même temps le coulissement des volets l'un par rapport à l'autre, coulissement poursuivi et/ ou maintenu par la coopération du doigt et de la came.

8. Connecteur selon la revendication 7, caractérisé en ce que la prise (1,1') sollicite ledit doigt d'entraînement (12a,12b) pour provoquer le déverrouillage et le coulissement des volets au moyen d'une partie frontale courbe (31) formant une came.

9. Connecteur selon l'une des revendications 1 à 8, caractérisé en ce que la prise mobile (1,1') est pourvue d'ergots latéraux (22a,22b) destinés à venir dans des logements (23a,23b) de l'élément protecteur aménagés au voisinage des points d'articulation en rotation de ce dernier.

10. Connecteur selon l'une des revendications 1 à 9, caractérisé en ce que la prise mobile est pourvue d'un moyen d'accrochage et de verrouillage (27,28;28'a,28'b) destiné à coopérer avec des moyens (29) conjugués aménagés sur le socle, lesdits moyens étant disposés à l'opposé de l'axe géométrique de rotation de l'élément de protection et de la prise, de façon à assurer un verrouillage de la prise dans le socle en position d'accouplement.

11. Connecteur selon l'une des revendications 1 à 10, caractérisé en ce que l'élément de protection (5) comporte au moins un ergot de guidage (21b) destiné à coopérer avec une encoche appropriée (20a, 20b) de la prise pour positionner celle-ci au cours de l'accouplement.

12. Connecteur selon l'une des revendications 1 à 11, caractérisé en ce que la prise est pourvue de contacts (4,4') aménagés dans des puits dont les embouchures sont masquées au repos par un volet de protection (16) monté translatif et pourvu d'au moins autant d'ajours (17,17') que la prise est pourvue de contacts et qui sont disposés de la même manière, tandis que le socle (2) est pourvu de moyens appropriés (24b) pour permettre le coulissement du volet de la prise de façon à juxtaposer les ajours (17,17') dudit volet (16) avec les contacts (4,4') de la prise au cours de l'accouplement.

13. Connecteur selon la revendication 12, caractérisé en ce que les moyens du socle pour faire coulisser le volet (16) de prise comportent au moins une butée fixe (24b) disposée de manière à solliciter la partie arrière dudit volet (16) en le poussant vers l'avant au cours de la rotation de ladite prise, des ajours correspondants (25) étant alors prévus dans les volets (8,9) de l'élément de protection pour le passage de ladite butée.

14. Connecteur selon l'une des revendications 12 et 13, caractérisé en ce que le volet (16) de la prise est verrouillé au repos par au moins un moyen élastique (19a,19b) qui est escamotable par sollicitation d'au moins un moyen approprié, au cours de l'accouplement.

15. Connecteur selon l'ensemble des revendications 11 et 14, caractérisé en ce que le moyen qui permet l'effacement du moyen de verrouillage (19a,19b) du volet (16) de la prise est constitué par l'ergot (21b) de guidage de l'élément de protection prévu pour positionner ladite prise.

16. Connecteur selon l'une des revendications 1 à 15 dont le socle et la prise sont pourvus chacun d'au moins un contact pilote (3';4') qui est destiné à commander un appareil de coupure disposé en amont de l'un des éléments, caractérisé en ce que chaque contact pilote est disposé sur l'élément correspondant à une plus grande distance de l'axe géométrique de rotation de la prise que ne le sont les contacts de puissance (3;4) dudit élément de façon à obtenir lors de l'accouplement des éléments par rotation, la connexion du contact pilote d'un élément avec le contact pilote antagoniste de l'autre élément seulement après la connexion des contacts de puissance et inversement lors du désaccouplement desdits éléments, la déconnexion desdits contacts pilotes avant la déconnexion des contacts de puissance.

17. Connecteur de charge pour véhicule automobile selon l'une des revendications 1 à 16, caractérisé en ce que le socle (2) est prévu pour être aménagé sur le véhicule et la prise mobile (1,1') connectée à une source d'alimentation électrique.

18. Connecteur selon l'une des revendications 1 à 17, caractérisé en ce que les contacts d'au moins l'un des éléments sont des contacts à pression.

19. Connecteur selon l'une des revendications 1 à 18, caractérisé en ce qu'au moins certains (4) des contacts d'au moins l'un (1') des éléments comportent des bornes de contact mobiles élastiquement, fixées sur des câbles (32) de connexion disposés au niveau desdites bornes perpendiculairement à la direction de connexion.

20. Connecteur selon l'une des revendications 1 à 19, caractérisé en ce que l'élément de protection (5) est muni d'au moins un ressort de rappel (15) pour le solliciter en rotation dans sa position initiale, tandis qu'au moins l'un (9) des volets dudit élément de protection est sollicité en translation vers sa position initiale de repos par au moins un ressort (14) de rappel.

21. Socle de connecteur destiné à constituer le socle d'un connecteur selon l'une des revendications 1 à 20.

22. Prise mobile de courant destinée à constituer la prise mobile d'un connecteur selon l'une des revendications 1 à 20.

## Patentansprüche

1. Elektrische Verbindungsvorrichtung mit zwei Verbindungselementen, von denen eines beweglich ist und die so ausgebildet sind, daß sie miteinander gekoppelt und voneinander entkoppelt werden können und bei denen einander entgegenwirkende Kontakte (3, 3'; 4, 4'), mit denen sie ausgerüstet sind, miteinander in Verbindung gebracht oder voneinander getrennt werden können, wobei mindestens die Kontakte des nicht beweglichen Elements Kontaktstücke (3, 3') aufweisen, die sich parallel zueinander erstrecken und eine Verbindungsrichtung definieren, während das Koppeln und Entkoppeln durch Drehung des beweglichen Elements im anderen Element um eine Achse bewirkt wird, die geometrisch senkrecht zur besagten Verbindungsrichtung angeordnet ist, dadurch gekennzeichnet, daß sie eine Steckverbindung bildet, bei welcher das bewegliche Element als Steckeraufnahme (1, 1') und das andere als Steckersockel (2) ausgebildet ist und daß der Sockel mit einem Schutzelement (5) versehen ist, welches im Ruhezustand die Kontaktstücke (3, 3') des besagten Sockels abdeckt und das drehbar derart in diesem angeordnet ist, daß es durch die bewegliche Steckeraufnahme im Verlauf des Koppelns zur Drehung gebracht wird, während das besagte Schutzelement (5) zwei Flügel (8, 9) aufweist, die gegeneinander verschiebbar sind und die jeweils mit mindestens soviel Öffnungen (10, 10'; 11, 11') versehen sind wie Kontaktstücke im Sockel vorhanden sind und die in der gleichen Weise angeordnet sind, wobei die Flügel im Ruhezustand derart zueinander angeordnet sind, daß die besagten Öffnungen gegeneinander verschoben sind und Mittel vorgesehen sind zum gegenseitigen Verschieben der Flügel im Verlauf des Koppelns bis zum Erreichen eines Nebeneinanderliegends der besagten Öffnungen (10, 10'; 11, 11'), die dann von den Kontaktstücken (3, 3') des Sockels durchquert werden können.

2. Steckverbindung nach Anspruch 1, dadurch gekennzeichnet, daß das Schutzelement (5) die Form eines zum Äußeren des Sockels hin offenen Keils besitzt und mit einer gekrümmten Grundplatte (7) versehen ist, die fest oder einstückig mit einem Basisflügel (8) verbunden ist, an dem verschiebbar ein Oberflügel befestigt ist, wobei die Drehachse des besagten Elements (5) in der Nähe des freien Randes des besagten Basisflügels (8) angeordnet ist.

3. Steckverbindung nach Anspruch 2, dadurch gekennzeichnet, daß die Steckeraufnahme einen gekrümmten Teil (30) mit einer an die Form der Grundplatte (7) des Schutzelements (5) angepaßten Form aufweist derart, daß die besagte Steckeraufnahme sich dicht in das besagte Schutzelement (5) einfügen kann.

4. Steckverbindung nach einem der Ansprüche 1 bis 3, dadurch gekennzeichnet, daß das Schutzelement (5) mindestens ein Mittel zur Verriegelung in der Anfangsstellung aufweist, das jede Drehung verhindert, und das besagte Mittel durch die bewegliche Steckeraufnahme (1, 1') im Verlauf ihres Koppelns entriegelbar ist.

5. Steckverbindung nach einem der Ansprüche 1 bis 4, dadurch gekennzeichnet, daß die Mittel, welche die gegenseitige Verschiebung der Flügel des Sockels bewirken derart ausgebildet sind, daß die besagte Verschiebung im Verlauf der Drehung wenigstens der beweglichen Steckeraufnahme (1, 1') bewirkt wird.

6. Steckverbindung nach Anspruch 5, dadurch gekennzeichnet, daß die Mittel, welche die gegenseitige Verschiebung der Flügel des Sockels bewirken und/oder aufrechterhalten, mindestens eine im Sockel (2) angeordnete feste Kurvenführung (13b) aufweisen sowie mindestens einen Betätigungsfinger (12a, 12b), der an einem (9) der Flügel befestigt und dazu bestimmt ist, mit der besagten Kurvenführung zusammenzuwirken.

7. Steckverbindung nach den beiden Ansprüchen 4 und 6, dadurch gekennzeichnet, daß das Mittel zum Verriegeln des Schutzelements (5) in der Anfangsstellung durch den Betätigungsfinger (12a, 12b) gesichert ist, der an einem Teil der festen Kurvenführung (13b) zur Anlage kommt und der durch die Steckeraufnahme (1, 1') im Verlauf ihres Koppelns in die Entriegelungsstellung geführt wird, wobei diese gleichzeitig die gegenseitige Verschiebung der Flügel bewirkt und die Verschiebung durch das Zusammenwirken des Fingers und der Kurvenführung fortgesetzt und/oder aufrechterhalten wird.

8. Steckverbindung nach Anspruch 7, dadurch gekennzeichnet, daß die Steckeraufnahme (1, 1') den besagten Betätigungsfinger (12a, 12b) zum Bewirken der Entriegelung und des Verschiebens der Flügel mittels einer gekrümmten Frontpartie beansprucht, welche eine Kurvenführung bildet.

9. Steckverbindung nach einem der Ansprüche 1 bis 8, dadurch gekennzeichnet, daß die bewegliche Steckeraufnahme (1, 1') mit seitlichen Vorsprüngen (22a, 22b) versehen ist, die dazu bestimmt sind, in Aufnahmen (23a, 23b) des Schutzelements einzugreifen, welche in der Nähe der Schwenkpunkte für die Drehung des letzteren angeordnet sind.

10. Steckverbindung nach einem der Ansprüche 1 bis 9, dadurch gekennzeichnet, daß die Steckeraufnahme mit einem Eingriffs- und Verriegelungsmittel (27, 28; 28'a, 28'b) versehen ist, das dazu bestimmt ist, mit ihm zugeordneten, am Sockel angeordneten Mitteln (29) zusammenzuwirken, wobei die besagten Mittel gegenüber der geometrischen Drehachse des Schutzelements der Steckeraufnahme derart angeordnet sind, daß eine Verriegelung der Steckeraufnahme im Sockel in der Koppelungsstellung sichergestellt ist.

11. Steckverbindung nach einem der Ansprüche 1 bis 10, dadurch gekennzeichnet, daß das Schutzelement (5) mindestens einen Führungsvorsprung (21b) aufweist, der dazu bestimmt ist, mit einer geeigneten Aussparung (20a, 20b) der Steckeraufnahme zusammenzuwirken, um diese im Verlauf des Koppelns zu positionieren.

12. Steckverbindung nach einem der Ansprüche 1 bis 11, dadurch gekennzeichnet, daß die Steckeraufnahme mit Kontakten (4, 4') versehen ist, die in Schächten angeordnet sind, deren Eintrittsöffnungen im Ruhezustand durch einen Schutzflügel (16) verdeckt sind, welcher verschiebbar montiert und mit mindestens so viel Öffnungen (17, 17') versehen ist, wie Kontakte in der Steckeraufnahme vorhanden sind und die in der gleichen Weise angeordnet sind, während der Sockel (2) mit geeigneten Mitteln (24b) versehen ist, um die Verschiebung des Flügels der Steckeraufnahme zu ermöglichen derart, daß im Verlauf des Koppelns die Öffnungen (17, 17') des besagten Flügels (16) neben den Kontakten (4, 4') der Steckeraufnahme liegen.

13. Steckverbindung nach Anspruch 12, dadurch gekennzeichnet, daß die Mittel des Sockels zum Bewirken der Verschiebung des Flügels (16) der Steckeraufnahme mindestens einen festen Anschlag (24b) aufweisen, welcher derart angeordnet ist, daß er die Rückseite des besagten Flügels (16) beansprucht, indem er ihn im Verlauf der Drehung der besagten Steckeraufnahme nach vorne drückt, wobei für den Durchtritt des besagten Anschlags entsprechende Öffnungen (25) in den Flügeln (8, 9) des Schutzelements vorgesehen sind.

14. Steckverbindung nach den Ansprüchen 12 und 13, dadurch gekennzeichnet, daß der Flügel (16) der Steckeraufnahme im Ruhezustand durch mindestens ein elastisches Mittel (19a, 19b) verriegelt ist, welches im Verlauf des Koppelns durch Beanspruchung von mindestens einem geeigneten Mittel her versenkbar ist.

15. Steckverbindung nach den beiden Ansprüchen 11 und 14, dadurch gekennzeichnet, daß das Mittel, welches die Rückstellung des Mittels (19a, 19b) zur Verriegelung des Flügels (16) der Steckeraufnahme ermöglicht, durch einen Führungsvorsprung (21b) des Schutzelements gebildet wird, der zur Positionierung der besagten Steckeraufnahme vorgesehen ist.

16. Steckverbindung nach einem der Ansprüche 1 bis 15, bei welcher der Sockel und die Steckeraufnahme jeweils mit mindestens einem Pilotkontakt versehen sind, der dazu bestimmt ist, eine Unterbrechungsvorrichtung anzusteuern, welche stromaufwärts eines der Elemente angeordnet ist, dadurch gekennzeichnet, daß jeder Pilotkontakt an dem entsprechenden Element in einer größeren Entfernung von der geometrischen Drehachse der Stekkeraufnahme angeordnet ist als die Leistungskontakte (3, 4) des besagten Elements derart, daß beim Koppeln der Elemente durch Drehung die Verbindung des Pilotkontakts eines Elements mit dem entsprechenden Pilotkontakt des anderen Elements erst nach der Verbindung der Leistungskontakte stattfindet und umgekehrt beim Entkoppeln der besagten Elemente das Lösen der besagten Pilotkontakte voneinander vor dem Lösen der Leistungskontakte stattfindet.

17. Ladestecker für Kraftfahrzeuge nach einem der Ansprüche 1 bis 16, dadurch gekennzeichnet, daß der Sockel (2) dazu vorgesehen ist, am Kraftfahrzeug angeordnet zu werden und die bewegliche Steckeraufnahme (1, 1') dazu vorgesehen ist, mit einer elektrischen Versorgungsvorrichtung verbunden zu werden.

18. Steckverbindung nach einem der Ansprüche 1 bis 17, dadurch gekennzeichnet, daß die Kontakte von mindestens einem der Elemente Druckkontakte sind.

19. Steckverbindung nach einem der Ansprüche 1 bis 18, dadurch gekennzeichnet, daß mindestens bestimmte (4) der Kontakte an mindestens einem (1') der Elemente elastisch bewegliche Kontaktklemmen aufweisen, die an Verbindungskabeln (32) befestigt sind, welche auf der Höhe der besagten Klemmen senkrecht zur Verbindungsrichtung angeordnet sind.

20. Steckverbindung nach einem der Ansprüche 1 bis 19, dadurch gekennzeichnet, daß das Schutzelement (5) mit mindestens einer Rückstellfeder (15) versehen ist, um es in seine Anfangsstellung zu drehen, während mindestens einer (9) der Flügel des besagten Schutzelements in seine anfängliche Ruhestellung durch mindestens eine Rückstellfeder (14) zurückgeschoben wird.

21. Steckersockel dazu bestimmt, den Sockel einer Steckverbindung nach einem der Ansprüche 1 bis 20 zu bilden.

22. Bewegliche Steckeraufnahme dazu bestimmt, die bewegliche Steckeraufnahme einer Steckverbindung nach einem der Ansprüche 1 bis 20 zu bilden.

## Claims

1. A current supply device having two connection elements one of which is portable and which are arranged so as to be able to be coupled together and uncoupled and to put in connection, or conversely separate, opposing contacts (3,3';4,4') with which they are provided, the contacts of at least the non portable element having contact pieces (3, 3') which extend parallel with each other and define a connection direction, while coupling and uncoupling are effected by rotation of the portable element within the other element about an axis arranged geometrically in such a way as to be perpendicular to the said connection direction, characterised in that it constitutes a connector, the portable element being a portable plug (1,1') and the other element a connector socket outlet (2), and in that the socket outlet is provided with a protection element (5) which during rest hides the contact pieces (3,3') of the said socket outlet and which is mounted rotatably in the latter in such a way as to be able to be driven in rotation by the portable plug during coupling, while the said protection element (5) has two flaps (8,9) which may slide in relation to each other and which are each provided with at least as many openings (10,10';11,11') as there are contact pieces in the socket outlet and which are arranged in the same way, the said flaps being positioned during rest one in relation to the other in such a way that the said openings are offset from each other and means being provided to bring about the sliding of the flaps one in relation to the other during the coupling until bringing about the juxtaposition of the said openings (10,10';11,11') through which the contact pieces (3,3') of the socket outlet may then pass.

2. A connector in accordance with claim 1 characterised in that the protection element (5) has the form of a block open towards the outside of the socket outlet and equipped with a dished seating (7) solidly attached to or integral with a base flap (8) on which is assembled in a sliding manner an upper flap, the axis of rotation of the said element (5) being arranged in the vicinity of the free edge of the said base flap (8).

3. A connector in accordance with claim 2 characterised in that the socket has a dished part (30) in a form corresponding to that of the seating (7) of the protection element (5) in such a way that the said plug may be housed tightly in the said protection element (5).

4. A connector in accordance with one of claims 1 to 3 characterised in that the protection element (5) has at least one means of locking in the initial position preventing all rotation, the said means being able to be unlocked by the portable plug (1,1') during its coupling.

5. A connector in accordance with one of claims 1 to 4 characterised in that the means which bring about the sliding of the flaps of the socket outlet in relation to one another are arranged so that the said sliding is achieved during the rotation of at least the portable plug (1,1').

6. A connector in accordance with claim 5 characterised in that the means which bring about and/or maintain the sliding of the flaps of the socket outlet in relation to each other have at least one fixed cam (13b) arranged in the socket outlet (2) and at least one activating pin (12a,12b) which is fixed on one (9) of the flaps and which is intended to cooperate with the said cam.

7. A connector in accordance with the combination of claims 4 and 6, characterised in that the means of locking the protection element (5) in the initial position is assured by the activating pin (12a,12b) which abuts on a part of the fixed cam (13b) and which is brought into the unlocked position by the plug (1, 1') during its coupling, which assures at the same time the sliding of the flaps in relation to one another, a sliding continued and/or maintained by the cooperation of the pin and the cam.

8. A connector in accordance with claim 7 characterised in that the plug (1,1') engages the said activating pin (12a,12b) in order to bring about the unlocking and the sliding of the flaps by means of a curved front part (31) forming a cam.

9. A connector in accordance with one of claims 1 to 8 characterised in that the portable plug (1,1') is provided with side spurs (22a,22b) intended to come into the housings (23a,23b) of the protection element arranged in the vicinity of the rotating articulation points of this latter.

10. A connector in accordance with one of claims 1 to 9 characterised in that the portable plug is provided with catching and locking means (27,28;28'a,28'b) intended to work with linked means (29) arranged on the socket outlet, the said means being arranged opposite the geometric axis of rotation of the protection element and of the socket, in such a way as to assure a locking of the plug in the socket outlet in the coupled position.

11. A connector in accordance with one of claims 1 to 10 characterised in that the protection element (5) has at least one guide spur (21b) intended to cooperate with an appropriate notch (20a,20b) of the socket in order to position this latter during the coupling.

12. A connector in accordance with one of claims 1 to 11 characterised in that the socket is provided with contacts (4,4') arranged in wells whose mouths are masked during rest by a protection flap (16) mounted so as to move and provided with at least as many openings (17,17') as the socket is provided with contacts and which are arranged in the same way, while the socket (2) is provided with appropriate means (24b) to allow the sliding of the flap of the socket in such a way as to juxtapose the openings (17,17') of the said flap (16) with the contacts (4,4') of the socket during coupling.

13. A connector in accordance with claim 12 characterised in that the means of the socket outlet to make the socket flap (16) slide have at least one fixed stop (24b) arranged so as to engage the rear part of the said flap (16) on pushing it towards the front during the rotation of the said socket, corresponding openings (25) then being provided in the flaps (8,9) of the protection element for the passage of the said stop.

14. A connector in accordance with one of claims 12 and 13 characterised in that the flap (16) of the socket is locked during rest by at least one elastic means (19a,19b) which is retractable by the engagement of at least one appropriate means, during coupling.

15. A connector in accordance with the combination of claims 11 and 14 characterised in that the means which allows the cancellation of the locking means (19a,19b) of the flap (16) of the socket is made up from the guide spur (21b) of the protection element provided in order to position the said plug.

16. A connector in accordance with one of claims 1 to 15 whose socket outlet and socket are each provided with at least one pilot contact (3';4') which is intended to control a cutout device arranged above one of the elements, characterised in that each pilot contact is arranged on the corresponding element at a greater distance from the geometric axis of rotation of the socket than are the power contacts (3;4) of the said element in such a way as to obtain at the time of the coupling of the elements by rotation, the connection of the pilot contact of an element with the opposing pilot contact of the other element only after the connection of the power contacts and conversely at the time of the uncoupling of the said elements, the disconnection of the said pilot contacts before the disconnection of the power contacts.

17. A charging connector for an automotive vehicle in accordance with one of claims 1 to 16 characterised in that the socket output (2) is envisaged to be fitted on the vehicle and the portable plug (1,1') connected to an electrical supply source.

18. A connector in accordance with one of claims 1 to 17 characterised in that the contacts of at least one of the elements are push contacts.

19. A connector in accordance with one of claims 1 to 18 characterised in that at least certain (4) of the contacts of at least one (1') of the elements have elastically movable contact terminals, fixed onto connection cables (32) arranged in the region of the said terminals perpendicular to the connection direction.

20. A connector in accordance with one of claims 1 to 19 characterised in that the protection element (5) is equipped with at least one tension spring (15) in order to bias it in rotation towards its initial position, while at least one (9) of the flaps of the said protection element is biassed towards its initial rest position by at least one tension spring (14).

21. A connector socket outlet intended to made up the socket outlet of a connector in accordance with one of claims 1 to 20.

22. A portable current plug intended to make up the portable plug of a connector in accordance with one of claims 1 to 20.
